## Europäisches Patentamt

## European Patent Office

## Office européen des brevets

(11) Veröffentlichungsnummer: **0 211 203**
**B1**

(12)

# EUROPÄISCHE PATENTSCHRIFT

(45) Veröffentlichungstag der Patentschrift:
**26.10.88**

(51) Int. Cl.⁴: **F 16 D 41/30**, B 62 M 9/10

(21) Anmeldenummer: **86108421.8**

(22) Anmeldetag: **20.06.86**

(54) Freilaufkupplung, insbesondere für Zweiräder.

(30) Priorität: **02.07.85 DE 3523545**

(43) Veröffentlichungstag der Anmeldung:
**25.02.87 Patentblatt 87/9**

(45) Bekanntmachung des Hinweises auf die Patenterteilung:
**26.10.88 Patentblatt 88/43**

(84) Benannte Vertragsstaaten:
**AT BE CH DE FR GB IT LI NL SE**

(56) Entgegenhaltungen:
**CH - A - 138 961**
**DE - C - 139 815**
**DE - C - 739 525**
**DE - C - 803 823**
**FR - A - 333 392**
**FR - A - 581 793**
**FR - A - 1 352 228**
**GB - A - 869 052**
**US - A - 2 226 247**

(73) Patentinhaber: **ESJOT Antriebstechnik GmbH & Co. KG,**
**Giselherstrasse 3, D-4600 Dortmund-Wickede (DE)**

(72) Erfinder: **Hoffmann, Joachim, Nöhstrasse 16,**
**D-5800 Hagen (DE)**

(74) Vertreter: **Sturies, Herbert et al, Patentanwälte Dr. Ing.**
**Dipl. Phys. Herbert Sturies Dipl. Ing. Peter Eichler**
**Brahmsstrasse 29, Postfach 20 12 42,**
**D-5600 Wuppertal 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine insbesondere für Zweiräder, wie z.B. Fahrräder, Mopeds und dergleichen bestimmte Freilaufkupplung, mit zwischen einem Innenrad und einem Aussenrad vorhandenen Lagerkugeln und einem verdrehbaren Lagerring sowie in dem Lagerring gelagerten Kupplungsklinken, die einerseits in einer am Innenrad vorhanden Aussenverzahnung und andererseits an am Innenumfang des Aussenrades vorhandenen Aussparungen abstützbar sind.

Freilaufkupplungen obiger Art sind durch die DE-C-139 815 sowie die CH-A-138 961 bekannt. Bei ihnen stehen die im Lagerring schwenkbeweglich gelagerten, winkelhebelartig ausgebildeten Kupplungsklinken in ständigem Eingriff mit je einer ihnen am Innenumfang des Aussenrades zugeordneten Aussparung, wobei der Lagerring gegenüber dem Aussenrad nur eine eng begrenzte Verdrehbarkeit besitzt, derzufolge die Kupplungsklinken mit ihrem freien Klinkenende mit der am Innenrad vorhandenen Aussenverzahnung entweder in oder ausser Eingriff gebracht werden können. Der Lagerring ist dabei gleitreibungsbehaftet im Aussenrad gelagert, während die Lagerkugeln zwischen dem Lagerring und dem Innenrad vorhanden sind. Ausser diesen Lagerkugeln sind noch weitere zwischen Innenrad und Lagerring vorhandene Klemmkugeln vorhanden, die im Zusammenwirken mit am Aussenumfang des Innenrades vorhandenen Federzungen die hier für den Kupplungsfall notwendige Abbremsung des Lagerrings gegenüber dem Aussenrad bewirken, damit die Kupplungsklinken mit ihren freien Enden in die Aussenverzahnung des Innenrades eingreifen können. Bei anderen, z.B. durch die FR-A-1 352 228 bekannten Freilaufkupplungen sind die Kupplungsklinken in am Innenradumfang vorhandenen Aussparungen schwenkbeweglich gelagert und jeweils durch ihnen zugeordnete Schenkelfedern so abgestützt, dass sie mit ihren freien Enden federnd an einer am Aussenrad vorhandenen Innenverzahnung anliegen bzw. im Kupplungsfall damit in formschlüssigen Eingriff gelangen. All diese Freilaufkupplungen bedingen einen erheblichen Herstellungs- und Montageaufwand. Darüberhinaus laufen sie auch noch nicht ausreichend geräuscharm.

Der Erfindung liegt daher die Aufgabe zugrunde, eine Freilaufkupplung der eingangs erwähnten Gattung dahingehend zu verbessern und zu vervollkommnen, dass sie von noch einfacherer und gedrängterer Bauart ist, leicht montiert werden kann und geräuschfreier läuft.

Diese Aufgabe wird erfindungsgemäss dadurch gelöst, dass das Aussenrad mit einer die Aussparungen bildenden Innenverzahnung versehen ist, dass der Lagerring auch gegenüber dem Aussenrad unbegrenzt verdrehbar ist, zugleich als Käfigring für die sich am Innen- und Aussenrad abstützenden Lagerkugeln dient, aus flexiblem Werkstoff besteht und mit seitlich auslaufenden Lagervorsprüngen für die darin waagebalkenartig gelagerten Kupplungsklinken versehen ist, welche Lagervorsprünge jeweils zwischen benachbarten Lagerkugeln gelegen sind. Auf diese Weise kommt man zu einer sehr einfach beschaffenen Freilaufkupplung, bei der die im flexiblen Lagerring mittig waagebalkenartig eingebetteten Kupplungsklinken im Kupplungsfall mit ihren beiden freien Enden in die entsprechenden Verzahnungen am Innen- und Aussenrad greifen, andernfalls daran abgleiten, und wobei der Lagerring seinerseits über die in ihm ringartig gehaltenen Lagerkugeln die unmittelbare reibungsarme Abstützung des Aussenrades gegenüber dem Innenrad ermöglicht. Darüberhinaus kommt man durch die seitlich versetzte Anordnung des Kugellagers und der Kupplungsklinken zu einer radial gedrängten Bauart, wobei es weiterhin von Vorteil ist, dass sich der Lagerring mit den in ihm lagernden Kupplungsklinken und den Kugeln leicht zwischen Aussen- und Innenrad montieren lässt. Schliesslich läuft die neue Freilaufkupplung auch praktisch geräuschfrei, insbesondere dann, wenn der die Kupplungsklinken tragende Lagerring aus flexiblem Kunststoff besteht.

Zweckmässig sind in den seitlichen Lagervorsprüngen des Lagerringes rechteckige Aufnahmetaschen für die darin schräg durchgesteckten, plättchenförmig ausgebildeten Kupplungsklinken vorhanden. Um die flexible Lagerung der Kupplungsklinken noch zu erhöhen, sind die Lagervorsprünge am Lagerring vorteilhaft gabelförmig geschlitzt, wobei die Gabelschlitze in Höhe der Aufnahmetaschen für die Kupplungsklinken liegen. Letztere sind vorteilhaft mit mittig gelegenen, ihre Längsverschiebung in den Aufnahmetaschen der Lagervorsprünge des Lagerringes verhindernden Führungswulsten versehen.

Das über die Kupplungsklinken mit dem Innenrad freilaufmässig zu kuppelnde Aussenrad kann im einfachsten Falle direkt als mit einer Aussenverzahnung versehenes Kettenrad ausgebildet sein. Es ist aber auch möglich, auf dem Aussenrad einen Lagerring verdrehungsfest anzuordnen, der ein oder mehrere, aus im Durchmesser abgestuften Kettenrädern bestehende Kettenradpakete trägt und der ein entsprechend ein- oder mehrfach abgewinkeltes Profil besitzt. Eine solche Ausbildung empfiehlt sich für entsprechend beschaffene Mehrgang-Kettenschaltungen an Zweirädern od. dgl.

In der Zeichnung sind zwei Ausführungsbeispiele erfindungsgemäss beschaffener Freilaufkupplungen dargestellt. Dabei zeigen:

Fig. 1 die Draufsicht auf eine Freilaufkupplung mit unmittelbar als Kettenrad ausgebildetem Aussenrad,

Fig. 2 einen Schnitt nach der Linie II-II der Fig. 1,

Fig. 3 eine für eine Fünfgang-Kettenschaltung ausgebildete Freilaufkupplung in axialem Schnitt,

Fig. 4 eine Draufsicht auf den in abgewickelter Form dargestellten flexiblen Kunststoffring in vergrösserter Teildarstellung und

Fig. 5 eine Schnittansicht gemäss der Linie V-V der Fig. 4.

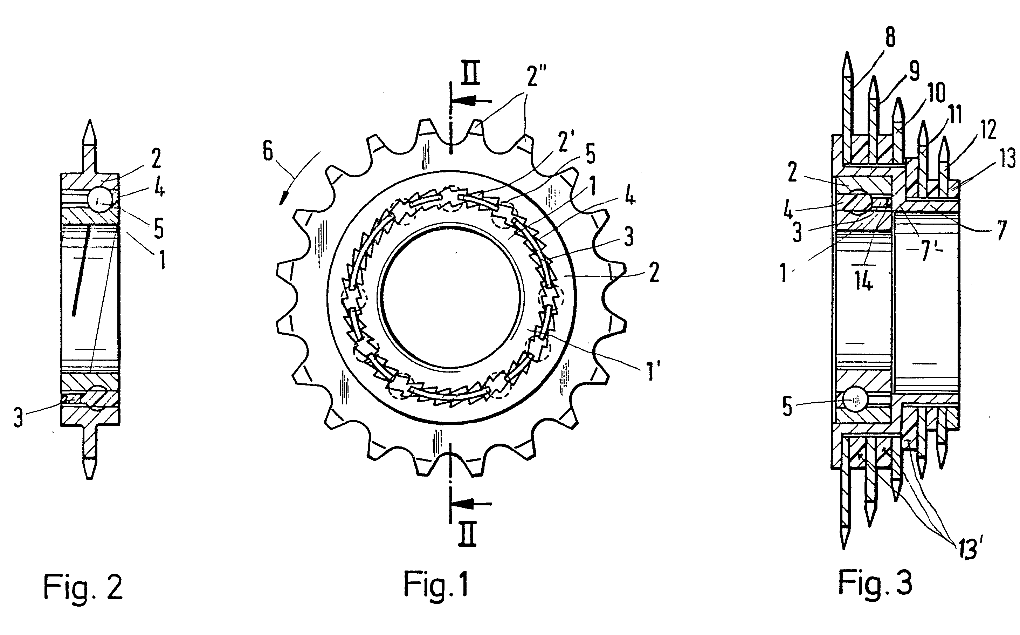

Die in den Fig. 1 und 2 dargestellte Freilaufkupplung besteht im wesentlichen aus dem Innenrad 1, dem damit freilaufzukuppelnden Aussenrad 2 und den dazwischen gelegenen Kupplungsklinken 3, die in einem zwischen den beiden Rädern 1, 2 gelegenen flexiblen Kunststoffring 4 waagebalkenartig gelagert sind. Diese Kupplungsklinken 3 können mit ihren äusseren Enden einerseits mit der am Innenrad 1 vorhandenen Aussenverzahnung 1' und andererseits mit der am Aussenrad 2 vorhandenen Innenverzahnung 2' in Kupplungseingriff gebracht werden. Das Aussenrad 2 ist im vorliegenden Fall als mit einer Aussenverzahnung 2'' versehenes Kettenrad ausgebildet. Es ist über die kugeln 5 eines auch im flexiblen Kunststoffring 4 gelegenen Kugellagers auf dem Innenrad 1 drehbeweglich abgestützt. Im vorliegenden Ausführungsbeispiel sind drei gleichmässig über den Kunststoffring verteilt angeordnete Kupplungsklinken vorhanden.

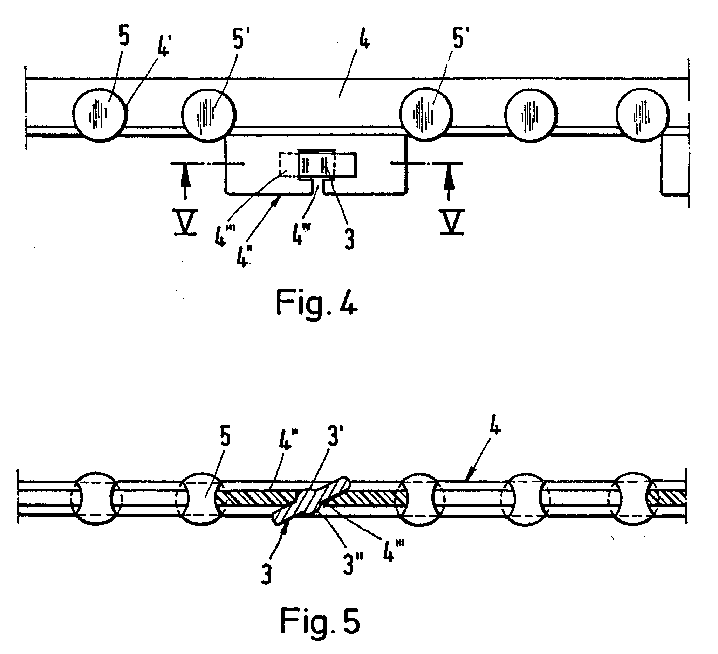

Wie die Fig. 4 und 5 zeigen, sind im flexiblen Kunststoffring 4, der zugleich als Käfigring für die Kugeln 5 des Kugellagers dient, mehrere Aussparungen 4' für die Aufnahme der Kugeln 5 vorhanden. Zwischen einigen der Kugeln 5' besteht ein grösserer Abstand. In diesem Bereich sind am flexiblen Kunststoffring 4 seitlich ausladende Lagervorsprünge 4'' vorgesehen, die zur Aufnahme der plättchenförmig ausgebildeten Kupplungsklinken 3 dienen. Hierzu sind in den Lagervorsprüngen 4'' rechteckige Aufnahmetaschen 4''' vorgesehen, durch die die Kupplungsklinken 3 schräg durchgesteckt sind. Damit letztere in ihrer Längsrichtung nicht in den Aufnahmetaschen 4''' verschoben werden können, sondern darin im wesentlichen nur schwenkbeweglich gelagert bzw. gehalten bleiben, befinden sich an den Kupplungsklinken 3 jeweils noch besondere Führungswulste 3' bzw. 3''. Um die Lagerung der Kupplungsklinken 3 in den Lagervorsprüngen 4'' noch flexibler zu gestalten, sind letztere zweckmässigerweise noch durch einen Gabelschlitz $4^{IV}$ unterteilt, der in Höhe der Aufnahmetaschen 4''' liegt. Der so gabelförmig unterteilte Lagervorsprung 4'' erhält dadurch eine grössere Flexibiltät, wodurch die Kupplungsklinke 3 in ihrer Freilaufstellung noch leichter über die eine oder andere oder gar beide sich gegenüberliegenden Verzahnungen 1', 2' am Innen- 1 bzw. Aussenrad 2 entlang- bzw. vorbeigleiten kann.

Geht man bei dem in den Fig. 1 und 2 dargestellten Kettenrad mit Freilaufkupplung davon aus, dass das als Kettenrad ausgebildete Aussenrad 2 den Drehantrieb im Sinne der eingezeichneten Pfeilrichtung 6 vermittelt, so wird das Innenrad 1 über den beidseitigen Eingriff der Kupplungsklinken 3 in der Aussenringverzahnung 2' und der Innenradverzahnung 1' in entsprechendem Drehsinn mitgenommen. Sobald aber die Drehzahl des Aussenrades 2 abnimmt, etwa im Falle der Aussenradbremsung, kann das Innenrad 1 das Aussenrad überholen, wobei die Kupplungsklinken 3 mit ihren Enden aus einer der beiden oder gar beiden Verzahnungen 1', 2' ausfahren und dann daran entlanggleiten.

Bei dem in Fig. 3 dargestellten Ausführungsbeispiel ist auf dem Aussenrad 2 ein Felgenring 7 verdrehungsfest angeordnet, der zwei mit abgestuften Kettenrädern 8, 9, 10 bzw. 11, 12 versehene Kettenradpakete trägt, die auf dem ein entsprechend zweifach abgewinkeltes Profil besitzenden Felgenring verdrehungssicher befestigt sind, beispielsweise mittels der Schraubmutter 13, die auf dem mit entsprechendem Aussengewinde versehenen Felgenring 7 aufgeschraubt ist. Zwischen den im Durchmesser abgestuften Kettenrädern 8 bis 12 sind elastische Distanzscheiben 13' vorgesehen, die zusammen mit den Kettenrädern 8 bis 10 bzw. 11 und 12 über eine Keil- oder Rändelverzahnung auf dem Felgenring 7 verdrehungsfest angeordnet sind. Der Ring 7 besitzt in seinem mittleren Teil eine radial verlaufende Anlagefläche 7', mit der er den zwischen Aussenrad 2 und Innenrad 1 vorhandenen Ringspalt 14 abdeckt, und zwar auf dessen die Kupplungsklinken 3 enthaltender Seite.

Es versteht sich, dass im Rahmen der Erfindung mancherlei Abwandlungen möglich sind. So kann der Käfigring 4 auch zu beiden Seiten seiner dann mittig gelegenen Kupplungsklinken 3 angeordnete Kugeln 5 zweier entsprechend gelegener Kugellager enthalten, der Käfigring also eine Abstützung zwischen Aussen- und Innenrad über zwei Kugellager ermöglichen. Weiterhin kann der die Kupplungsklinken 3 tragende Lagering 4 statt aus flexiblem Kunststoff auch aus Federbandstahl bestehen. Auch andere flexible Werkstoffe, wie z.B. auch entsprechende Nichteisenmetalle können für den Lagerring verwendet werden.

## Patentansprüche

1. Freilaufkupplung, insbesondere für Zweiräder, wie z.B. Fahrräder, Mopeds und dergleichen, mit zwischen einem Innenrad (1) und einem Aussenrad (2) vorhandenen Lagerkugeln (5) und einem verdrehbaren Lagerring (4) sowie in dem Lagerring gelagerten Kupplungsklinken (3), die einerseits in einer am Innenrad (1) vorhandenen Aussenverzahnung (1') und andererseits an am Innenumfang des Aussenrades (2) vorhandenen Aussparungen (2') abstützbar sind, dadurch gekennzeichnet, dass das Aussenrad mit einer die Aussparungen bildenden Innenverzahnung (2') versehen ist, dass der Lagerring (4) auch gegenüber dem Aussenrad (2) unbegrenzt verdrehbar ist, zugleich als Käfigring für die sich am Innen- und Aussenrad (1, 2) abstützenden Lagerkugeln (5) dient, aus flexiblem Werkstoff besteht und mit seitlich ausladenden Lagervorsprüngen (4'') für die darin waagebalkenartig gelagerten Kupplungsklinken (3) versehen ist, welche Lagervorsprünge jeweils zwischen benachbarten Lagerkugeln (5') gelegen sind.

2. Freilaufkupplung nach Anspruch 1, dadurch gekennzeichnet, dass in den seitlichen Lagervorsprüngen (4'') des Lagerringes (4) rechteckige Aufnahmetaschen (4''') für die darin schräg durchgestecken, plättchenförmig ausgebildeten Kupplungsklinken (3) vorhanden sind.

3. Freilaufkupplung nach Anspruch 2, dadurch gekennzeichnet, dass die Lagervorsprüngen (4'') am Lagerring (4) gabelförmig geschlitzt sind, wobei die Gabelschlitze ($4^{IV}$) in Höhe der Aufnahmetaschen (4''') für die Kupplungsklinken (3) liegen.

4. Freilaufkupplung nach Anspruch 2, dadurch gekennzeichnet, dass die Kupplungsklinken (3) mit mittig gelegenen, ihre Längsverschiebung in den Aufnahmetaschen (4''') der Lagervorsprünge (4'') des Lagerringes (4) verhindernden Führungswulsten (3', 3'') versehen sind.

5. Freilaufkupplung nach einem der Ansprüche 1 bis 4, dadurch gekennzeichnet, dass sie drei gleichmässig über den flexiblen Lagerring (4) verteilt angeordnete Kupplungsklinken (3) besitzt.

6. Freilaufkupplung nach Anspruch 1, dadurch gekennzeichnet, dass der Lagerring (4) beidseitig seiner mittig gelegenen Kupplungsklinken (3) angeordnete Kugeln (5) zweier entsprechend gelegener Kugellager enthält.

7. Freilaufkupplung nach einem der Ansprüche 1 bis 6, dadurch gekennzeichnet, dass der die Kupplungsklinken (3) tragende Lagerring (4) aus flexiblem Kunststoff besteht.

8. Freilaufkupplung nach einem der Ansprüche 1 bis 6, dadurch gekennzeichnet, dass der die Kupplungsklinken (3) tragende Lagerring (4) aus Federbandstahl besteht.

9. Freilaufkupplung nach einem der Ansprüche 1 bis 8, dadurch gekennzeichnet, dass das Aussenrad (2) als mit einer Aussenverzahnung (2'') versehenes Kettenrad ausgebildet ist.

10. Freilaufkupplung nach einem der Ansprüche 1 bis 8, dadurch gekennzeichnet, dass auf dem Aussenrad (2) ein ein oder mehrere, aus im Durchmesser abgestuften Kettenrädern (8-12) bestehende Kettenradpakete tragender Felgenring (7) verdrehungsfest angeordnet ist, der ein entsprechend ein- oder mehrfach abgewinkeltes Profil besitzt.

11. Freilaufkupplung nach Anspruch 10, dadurch gekennzeichnet, dass der die Kettenradpakete tragende Felgenring (7) mit einer radial verlaufenden Anlagefläche (7') den zwischen Aussen- und Innenrad (2 bzw. 1) vorhandenen Ringspalt (14) auf seiner die Kupplungsklinken (3) enthaltenden Seite abdeckt.

## Claims

1. Freewheel clutch, particularly for two-wheeled vehicles, such as for example bicycles, mopeds and the like, comprising bearing balls (5) provided between an inner wheel (1) and an outer wheel (2), and a rotatable bearing ring (4), as well as coupling detents (3) mounted in the bearing ring, said coupling detents being engageable on the one hand with an outer toothing (1') provided on the inner wheel (1) and on the other hand with recesses (2') provided in the inner periphery of the outer wheel (2), characterised in that the outer wheel is provided with an inner toothing (2') forming said recesses, that the bearing ring (4) is rotatable without limit relative to the outer wheel (2'), and that the bearing ring serves as a cage ring for the bearing balls (5) supporting the inner and outer wheels (1, 2), is of flexible material and is provided with laterally projecting bearing tongues (4'') for the coupling detents (3) mounted in beam-balance manner therein, said bearing tongues each being positioned between adjacent bearing balls (5').

2. Freewheel clutch according to claim 1, characterised in that rectangular receiving pockets (4''') are provided in the lateral bearing tongues (4'') of the bearing ring (4) for the lamella-type coupling detents (3) which are fitted therein in an inclined attitude.

3. Freewheel clutch according to claim 2, characterised in that the bearing tongues (4'') on the bearing ring (4) are slotted to bifurcate the tongues, with the slots (4$^{IV}$) being at the level of the receiving pockets (4''') for the coupling detents (3).

4. Freewheel clutch according to claim 2, characterised in that the coupling detents (3) are provided with central guide ribs (3', 3'') preventing their longitudinal displacement in the receiving pockets (4''') of the bearing tongues (4'') of the bearing ring (4).

5. Freewheel clutch according to one of claims 1 to 4, characterised in that there are three coupling detents (3) arranged equispaced around the flexible bearing ring (4).

6. Freewheel clutch according to claim 1, characterised in that the bearing ring (4) contains balls (5) to two appropriately positioned ball bearings, said balls being arranged on respective sides of centrally positioned coupling detents (3).

7. Freewheel clutch according to one of claims 1 to 6, characterised in that the bearing ring (4) carrying the coupling detents (3) is of flexible plastics material.

8. Freewheel clutch according to one of claims 1 to 6, characterised in that the bearing ring (4) carrying the coupling detents (3) is of spring steel strip.

9. Freewheel clutch according to one of claims 1 to 8, characterised in that the outer wheel (2) is formed as a sprocket wheel provided with an outer toothing (2'').

10. Freewheel clutch according to one of claims 1 to 8, characterised in that on the outer wheel (2) there is provided a flanges ring (7) for fixed rotation therewith and carrying one or more sets of sprocket wheels consisting of sprocket wheels (8 to 12) graduated in diameter, said flanged ring having a corresponding profile which is provided with one or more steps.

11. Freewheel clutch according to claim 10, characterised in that the flanged ring (7) carrying the sets of sprocket wheels includes a radially extending abutment face (7') which covers the annular gap (14) provided between outer and inner wheels (2 and 1) on the side incorporating the coupling detents (3).

## Revendications

1. Accouplement à roue libre, en particulier pour véhicules à deux roues tels que par exemple des bicyclettes, des cyclomoteurs et équivalents, comprenant des billes de roulement (5) interposées entre une roue intérieure (1) et une roue extérieure (2) et une bague d'appui rotative (4), ainsi que des cliquets d'accouplement (3) montés dans la bague d'appui et qui peuvent s'appuyer, d'une part, dans une denture extérieure (1') prévu sur la roue intérieure (1) et, d'autre part, dans des encoches (2') prévues dans la périphérie intérieure de la roue extérieure (2), caractérisé en ce que la roue extérieure est munie d'une denture intérieure (2') qui forme les encoches, et en ce que la bague d'appui (4) peut aussi tourner de façon illimitée par rapport à la roue extérieure (2), sert en même temps de cage pour les billes de roulement (5) qui s'appuient sur la roue intérieure et sur la roue extérieure (1, 2), est faite d'une matière plastique flexible, et est munie de protubérances d'appui (4'') faisant saillie latéralement pour les cliquets d'accouplement (3) qui sont montés dans ces protubérances pour osciller à la façon d'un fléau de balance, lesquelles protubérances d'appui sont interposées entre des billes de roulement (5') adjacentes.

2. Accouplement à roue libre selon la revendication 1, caractérisé en ce que dans les protubérances d'appui latérales (4'') de la bague d'appui (4), sont prévues des poches de logement rectangulaires (4''') destinées à recevoir les cliquets d'accouplement (3), lesquels se présentent sous la forme de plaquettes et sont insérés obliquement dans les poches.

3. Accouplement à roue libre selon la revendication 2, caractérisé en ce que les protubérances d'appui (4'') de la bague d'appui (4) sont fendues en forme de fourche, les fentes en forme de fourche (4$^{IV}$) se trouvant au niveau des poches de logement (4''') des cliquets d'accouplement (3).

4. Accouplement à roue libre selon la revendication 2, caractérisé en ce que les cliquets d'accouplement (3) sont munis de bossages de guidage (3', 3'') prévus en leur milieu et les empêchant de se déplacer longitudinalement dans les poches de logement (4''') des protubérances d'appui (4'') de la bague d'appui (4).

5. Accouplement à roue libre selon une des revendications 1 à 4, caractérisé en ce qu'il possède trois cliquets d'accouplement (3) répartis uniformément sur la bague d'appui flexible (4).

6. Accouplement à roue libre selon la revendication 1, caractérisé en ce que la bague d'appui (4) renferme des billes (5) disposées de part et d'autre de ses cliquets d'accouplement (3) placés en position médiane, et qui appartiennent à deux roulements à billes placés dans des positions correspondantes.

7. Accouplement à roue libre selon une des revendications 1 à 6, caractérisé en ce que la bague d'appui (4) qui porte les cliquets d'accouplement (3) est faite d'une matière plastique flexible.

8. Accouplement à roue libre selon une des revendications 1 à 6, caractérisé en ce que la bague d'appui (4) qui porte les cliquets d'accouplement (3) est faite d'un feuillard d'acier à ressorts.

9. Accouplement à roue libre selon une des revendications 1 à 8, caractérisé en ce que la roue extérieure (2) est constituée par un pignon à chaîne muni d'une denture extérieure (2'').

10. Accouplement à roue libre selon une des revendications 1 à 8, caractérisé en ce que, sur la roue extérieure (2), est montée solidairement en rotation, une virole (7) qui porte un ou plusieurs paquet(s) de pignon à chaîne composés de pignons à chaîne (8 à 12) de diamètres échelonnés, et qui présente un profil correspondant à un ou plusieurs redan(s).

11. Accouplement à roue libre selon la revendication 10, caractérisé en ce que la virole (7) qui porte les paquets de pignons à chaîne recouvre, par une surface d'appui (7') orientée radialement, la fente annulaire (14) comprise entre la roue extérieure et la roue intérieure (2, resp. 1), sur le côté de cette fente qui contient les cliquets d'accouplement (3).

Fig. 2

Fig.1

Fig. 3

0 211 203

Fig. 4

Fig. 5

0 211 203